# EUROPÄISCHE PATENTSCHRIFT

(11) **EP 3 635 273 B1**
(45) Veröffentlichungstag und Bekanntmachung des Hinweises auf die Patenterteilung: **23.02.2022**
(21) Anmeldenummer: 18727719.9
(22) Anmeldetag: 16.05.2018
(51) Int. Cl.: F16D 65/18, B21D 22/14, B21K 1/18

(54) **KALTUMGEFORMTER BREMSKOLBEN**
COLD-WORKED BRAKE PISTON
PISTON DE FREIN DÉFORMÉ À FROID

(30) Priorität: 09.06.2017 DE 102017209761; 21.08.2017 DE 102017214540
(43) Veröffentlichungstag der Anmeldung: 15.04.2020
(73) Patentinhaber: Continental Teves AG & Co. OHG, 60488 Frankfurt am Main (DE); Erdrich Umformtechnik GmbH, 77871 Renchen-Ulm (DE)
(72) Erfinder: BACH, Uwe, 65527 Niedernhausen (DE); ZEIBIG, Uwe, 77855 Achern (DE); MÜLLER, Matthias, 77704 Oberkirch (DE); LORENZ, Ulrich, 99610 Sömmerda (DE); BAUERSFELD, Rico, 06578 Kannawurf (DE)
(74) Vertreter: Epping - Hermann - Fischer
(86) Internationale Anmeldenummer: PCT/EP2018/062751
(87) Internationale Veröffentlichungsnummer: WO 2018/224271

(56) Entgegenhaltungen:
- WO-A1-2016/165897
- DE-A1-102013 223 962
- JP-A- S5 395 156
- JP-A- 2000 218 336
- JENSRUD ET AL: "Cold forging of high strength aluminum alloys and the development of new thermomechanical processing", JOURNAL OF MATERIALS PROCESSING TECHNO, ELSEVIER, NL, Bd. 80-81, 1. August 1998 (1998-08-01), Seiten 156-160, XP005310782, ISSN: 0924-0136, DOI: 10.1016/S0924-0136(98)00219-2

## Beschreibung

Die Erfindung betrifft einen kaltumgeformten Bremskolben - vorzugsweise mit Schnittstellenarrangement für eine Feststellbremse - mit den Merkmalen vom Oberbegriff vom Patentanspruch 1.

Topfförmige und einseitig offene Bremskolben mit Kolbenboden und Kolbenwandung sowie passendem Schnittstellenarrangement zur Verwendung für Betriebsbremssättel von Scheibenbremsen sind grundsätzlich bekannt. Diese Kolben sind durch Umformverfahren erhalten, also nicht einfach gegossen und zerspant, sondern durch Umformprozesse mittels Fliesspressen oder Tiefziehen gewonnen. Bremskolben für Betriebsbremsen sind durch eigenständige Schwerpunkte und Entwicklungszielrichtungen zur umgewidmeten Nutzung bei kombiniert betätigbaren Feststellbremssätteln nicht geeignet. Beispielsweise ist deren Kolbeninnenraum zum Eingriff und zur Fixierung einer Reibbelaghaltefeder optimiert, und wobei jegliche Schnittstelle für einen Feststellbremsmechanismus fehlt.

JP 2000 218336 A betrifft einen Kolben für einen Verbrennungsmotorapplikation und dessen Herstellung.

JP S53 95156 A betrifft einen Bremskolben ohne Schnittstelle für eine Feststellbremsaktuatorik und mit einer Anlage für den Reibbbelag am offenen Ende des Bremskolbens.

WO 2016/165897 A1 betrifft einen mehrteilig aufgebauten Kolben für einen Bremssattel, der als einseitig offener Topf mit einer Längsachse, mit einer Wandung, und mit einem Kolbenboden (6) einstückig ausgebildet ist.

DE 10 2013 223962 A1 betrifft einen Kolben, der als einseitig offener Hohlzylinder spanlos aus dünnem Stahlblech oder einem Stahldrahtabschnitt umgeformt gestaltet ist, und einen Kolbenboden sowie einstückig daran eine Wandung umfasst.

In JENSRUD ET AL: "Cold forging of high strength aluminum alloys and the development of new thermomechanical processing", JOURNAL OF MATERIALS PROCESSING TECHNO, ELSEVIER, NL, Bd. 80-81, 1. August 1998 (1998-08-01), Seiten 156-160, XP005310782, ISSN: 0924-01 36, DOI : 1 0.1 01 6/S0924-01 36(98)00219-2 wird das Kaltschmieden diskutiert als ein Verfahren, das sich zur Herstellung von Automobilkomponenten aus hochfesten Aluminiumlegierungen eignet.

Aus der EP 2 304 265 B1 ist ein umgeformter, kaltverfestigter sowie mehrteilig gebauter Feststellbremskolben aus Stahlwerkstoff mit Zielrichtung zur Verwendung für einen kombiniert betätigbaren Feststellbremssattel bekannt, der im wesentlichen als einseitig offener, topfartiger Hohlzylinder gestaltet ist, und einen Boden sowie einstückig daran eine Kolbenwandung mit einer Nut umfasst, wobei der Boden ausgehend vom Topfinneren mit Bremsdruck beaufschlagbar ist, so dass eine auswärts gerichtete Anlagefläche des Bodens gegen einen Bremsbelag pressbar ist, und wobei das Topfinnere einen Napf als Druckstück aufnimmt, das in einen Kraftfluss von einem Feststellbremsmechanismus eingebunden ist, indem eine Gewindemutter mittelbar über das Druckstück zwecks Kraftübertragung über eine Konusfläche am Boden abgestützt ist. Demzufolge verfügt das Bremskolbensystem neben seinen Schnittstellen zur Betriebsbremse über ein zusätzliches Schnittstellenarrangement zur Interaktion mit einem Feststellbremsmechanismus. Eine Kolbenwandung von dem Kolben verfügt dazu über eine Aufnahme für das Druckstück, welches verdrehgesichert im Kolben angeordnet ist. Ein Vorteil dieser bekannten Lösung ist Wesentlich im Druckstück verkörpert, das die Kolbenwandung einerseits entlastet, und andererseits ein Kolbenbaukastensystem ermöglicht. Bekannte Napfziehverfahren leiden unter einem erhöhten Aufwand beziehungsweise dem Nachteil, dass diese grundsätzlich mit einer sukzessiven Wandstärkenverringerung (bezogen auf die ursprüngliche Blechdicke) einhergehen, ein Kolbenboden prinzipiell über die dickste Wandstärke vom Kolbensystem verfügt, und wobei die Kolbenwandung demgegenüber reduziert, nämlich abgestreckt geformt ist. Demzufolge wird die eingeräumte Gestaltungsfreiheit, bei vertretbarem Aufwand, unangemessen beengt empfunden.

Weil aktuell ein Bedürfnis nach alternativen und funktionsverbessert gestalteten Bremskolben besteht, liegt der vorliegenden Erfindung die Aufgabe zu Grunde, einen besonders rationell kaltumgeformt darstellbaren Bremskolben vorzulegen, welcher zudem über eine verbesserte Harmonie im Kraftfluss über seine Schnittstellen in der Interaktion mit seiner Kolbenführung verfügt, und auch hinsichtlich seiner Belastbarkeit gesteigert ist, bzw. bei ausreichender Belastbarkeit ein reduziertes Gewicht ermöglicht. Die Aufgabe erstreckt sich ebenso auf die Bereitstellung vom passenden Umformverfahren bzw. Werkzeugbau zur Applikation/Interaktion für eine mikroprozessorgestützte (Hub-, Kraft-, und oder Geschwindigkeitsvariation) mechanische oder hydraulische Presse.

Die Aufgabe wird erstmals bei einem Bremskolben, prinzipiell unter Verzicht auf ein besonderes Druckstück, sowie spanlos, anhand von einem partiell kaltgestauchten, oder abgestreckten, zylindrischen Kolbenwandabschnitt gelöst, welcher mit partiell deformierter Kolbenwandung vorliegt, die durch plastische Werkstoffdeformation mittels Werkstoffumverteilung (Fließen) einschließlich Kaltverfestigung in Ihrer Wandstärke s1-x (bezogen auf die ursprüngliche Werkstoff/Blechdicke s0) adaptiv verändert ausgebildet ist. Die Erfindung ermöglicht demzufolge ein freies Umformen, einschließlich mehrfache Wechsel zwischen dünnen und dicken Passagen bei freiheitlicher Wandstärkengestaltung, ohne an die Grundsätze einer unumkehrbar-sukzessiven Wandstärkenreduktion beim Umformen (wie insbesondere durch Reduktion der Wandstärke beim Tiefziehen: dick > dünn) gebunden zu sein. Ein Vorteil der Erfindung besteht darin, dass diese in Ihrer Anwendung universell ist, und sich also zudem für eine Applikation bei den Feststellbremskolben eignet.

Dabei bezieht sich die Erfindung in bevorzugter Ausgestaltung primär auf partiell verdickt ausgebildete Wandstärkenbezirke (bezogen auf eine ursprüngliche Werkstoff/Blechdicke s0), indem a) eine Kolbenwandung in einem Kolbenwandabschnitt örtlich begrenzt durch axial gerichtete Druck- und/oder Zugspannung zylindrisch-glatt sowie nutfrei derart gezogen ausgebildet ist, dass b) eine Kolbenwandung in dem Kolbenwandabschnitt eine einstückig ausgeprägte Wandkonsole ausbildet, die radial einwärts in Richtung Kolbenlängsachse sowie ununterbrochen bzw. unterbrochen ringförmig umlaufend derart vorfällt, dass c) die Kolbenwandstärke in dem Kolbenwandabschnitt der Wandkonsole örtlich begrenzt um ein Vielfaches erhöht ist in Relation bezogen auf Kolbenwandstärken von seitlich benachbart (lateral versetzt) angrenzenden Kolbenwandabschnitten. Ein besonderer Vorteil erfindungsgemäßer Bremskolben besteht in deren leicht sowie stabil ausgeführtem Aufbau bei rationalisierter Herstellung in Verbindung mit verbesserter Tragfähigkeit in Kooperation mit dem Kolbenführungssystem. Im Fokus steht dabei eine besonders beanspruchungsgerecht örtlich begrenzt ausgeprägte, und dabei rationell-gürtelartig erstellte, Kolbenwandaufdickung, die durch Werkstoffverdrängung und -umverteilung (fließen) aus dem freien Randbereich der Kolbenwandung ausgeht. Dabei ist die Aufdickung dazu prädestiniert, um Spannungskonzentrationen und Spannungsmaxima in der Kolbenwandung - entsprechend den Gesetzen der Kesselformel - effizient aufzufangen. Das entsprechende Umformverfahren umfasst im Wesentlichen mindestens einen Verfahrensschritt wobei die Kolbenwandung, zur Erzeugung von einem dreiachsigen Spannungszustand, in Axialrichtung parallel zur Bremskolbenlängsachse, mit Druck eingespannt wird. Dies führt zur Verlagerung vom Werkstoffvolumen V in Richtung V'.

Ein alternativer erfindungsgemäßer Herstellprozess, welcher gleichfalls eine spanlose Verlagerung vom Werkstoffvolumen integriert, erstreckt sich auf ein besonderes Innenrollierverfahren. Dies umfasst ein Rollierwerkzeug, das frei drehbar und vorzugsweise im Übrigen fest deaxiert in dem Arbeitsraum gelagert angeordnet ist. Ein napfförmiger Bremskolbenrohling ist von außen in einer drehbar angetriebene Spannvorrichtung eingespannt. Es wird vorgeschlagen, dass die Spannvorrichtung, neben der Antriebsdrehbewegung zusätzlich die Vorschubbewegung und die Zustellbewegung in Relation zu dem Rollierwerkzeug ausführt. In weiterer Alternative ist es jedoch denkbar, dass dem Rollierwerkzeug die Ausführung von der Vorschubbewegung und/oder von der Zustellbewegung zukommt, während der Bremskolbenrohling dreht.

Zum erfindungsgemäßen Leichtbaukonzept trägt es bei, wenn jeweils seitlich benachbart neben der Kolbenwandaufdickung die unverdickte, also einfache, Kolbenwandstärke vorliegt. Mit anderen Worten sind die beiden Kolbenwandabschnitte, welche lateral-seitlich neben der aufgedickten Wandkonsole versetzt arrangiert sind, in Bezug auf die Wandstärke reduziert gestaltet. Weiterhin vorzugsweise stimmt die Kolbenwandstärke in den beiden lateral seitlich versetzten Kolbenwandabschnitten im Wesentlichen identisch überein.

Ein rationeller Aufbau wird erhalten, wenn die aufgedickte Wandkonsole zudem die Schnittstelle für die Feststellbremsaktuatorik integriert. Selbstzentrierende Eigenschaften werden unter reduzierten Kerbwirkungseinflüssen unter weitgehend minimiertem Zusatzwerkstoffaufwand erhalten, wenn jede Wandkonsole über wenigstens eine Flanke mit einer Konizität verfügt. Alternativ oder ergänzend hierzu ist es bei graduell veränderten Dauerfestigkeitswerten ermöglicht, wenn die Wandkonsole über eine Flanke mit balliger Ausprägung verfügt.

Lateral seitlich neben der aufgedickten Wandkonsole, sowie in Richtung zum Kolbenboden versetzt, kann eine Aussteifung zur biegesteifen Stabilisierung im Bereich zwischen Kolbenboden und Kolbenwandung vorgesehen sein. Beispielhaft handelt es sich bei dieser Aussteifung um eine radial einwärts einrollierte Nut, die in Verbindung mit einer einfachen, unverdickten Kolbenwandstärke in die Kolbenwandung derart eingeprägt ist, dass die Kolbenwandung einen mäanderartig radial einwärts gewundenen Vorfall in Richtung Kolbenlängsachse beschreibt.

Die Systementlüftbarkeit wird positiv unterstützt, wenn die aufgedickte Wandkonsole und der Vorfall in Radialrichtung jeweils unterschiedlich tief in Richtung Kolbenlängsachse ins Kolbeninnere vorstehen. Vorzugsweise ist in diesem Zusammenhang der Vorfall kleiner als die Wandkonsole ausgebildet.

Die Prozesstechnologie erhellt mithin aus den Merkmalen von nebengeordneten Patentansprüchen, welche unabhängig vom Bremskolben als primäres Produkt, also gesondert zum Sachanspruch, nebeneinander sehr sinnvolle Verfahren sowie Vorrichtungen zur Durchführung von den neuartigen Umformprozessen zum Gegenstand haben.

Weitere Merkmale, Vorteile sowie Wirkungen der Erfindung gehen aus Unteransprüchen im Zusammenhang mit der Beschreibung anhand der Zeichnung hervor. In der Zeichnung zeigt:
Fig. 1 einen bekannten Feststellbremskolben, vergrößert perspektivisch sowie geschnitten, gemäß EP 2 304 265 B1 zwecks grundsätzlicher Erläuterung,
Fig. 2 etwa maßstabgerechter Längsschnitt durch eine Ausführungsformen vom erfindungsgemäßen Bremskolben,
Fig. 3 Kolbenlängsschnitt wie in Fig. 2, etwa 2,5fach vergrößert,
Fig. 4 nur die Wandkonsole vergrößert gemäß Einzelheit IV in Fig. 3,
Fig. 5 schematisch vereinfachte Veranschaulichung zu Verfahren, Vorrichtung und Kinematik gemäß einer Ausgestaltung mit zugehörigem Vorrichtungsbau unter Verwendung eines Dorns zur Ausbildung einer verdickten Wandkonsole, und
Fig. 6 schematisch vereinfacht ein alternativer Herstellprozess, umfassend ein frei drehbar gelagertes Innenrollierwerkzeug und eine feste Außeneinspannung vom Bremskolbenrohling, und wobei die Spannvorrichtung neben dem rotatorischen Antrieb zusätzlich die Vorschubbewegung und die Zustellbewegung in Relation zu dem Rollierwerkzeug ausführt.

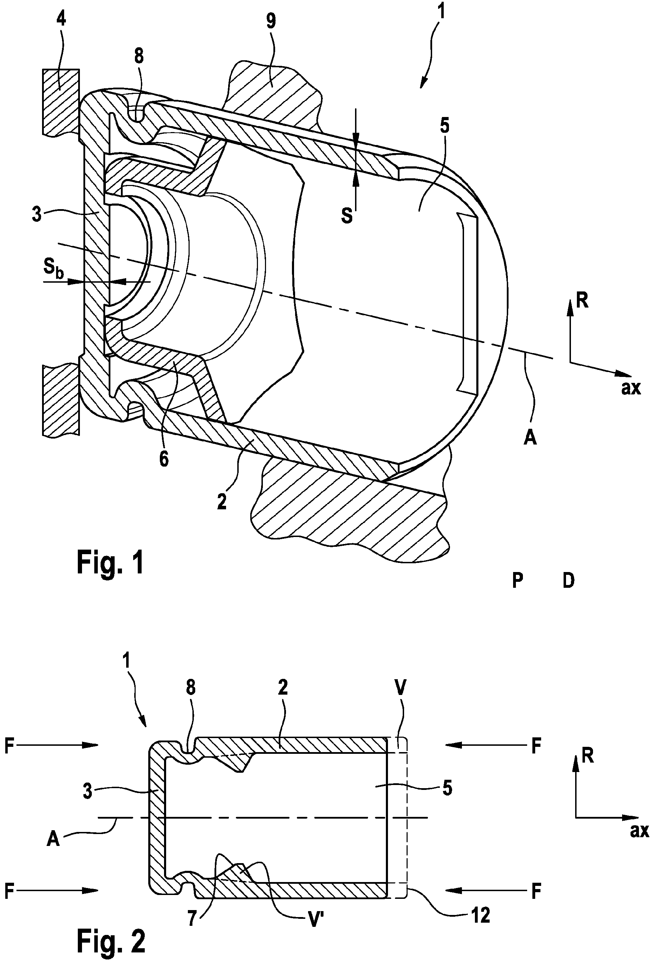

Bezüglich Fig. 1 wird zwecks erleichtertem Verständnis wie auch zwecks Vermeidung von unnötiger vollständiger Wiederholung die Beschreibung der EP 2 304 265 B1 hiermit in vollem Umfang einbezogen, so dass anhand dieses Rückgriffs hiermit eine rudimentäre Aufzählung der bekannten Zusammenhänge genügt.

Ein Bremskolben 1 nach Fig. 1 ist in Umformprozessen aus einem metallischen Werkstoff, wie beispielsweise aus einem ebenen Blech einer Wandstärke s0 , hergestellt, und als einseitig offener Topf mit einer Kolbenlängsachse A, mit einer Kolbenwandung 2 und mit einem Kolbenboden 3 einstückig ausgebildet. Der Kolbenboden 3 dient in multipler (dreifacher) Hinsicht als Schnittstelle. Einerseits ist der Kolbenboden 3 mit einer axialen Anlagefläche an eine Rückenplatte 4 von einem symbolhaft gezeigten Bremsbelag anlegbar. Auf der diametral gegenüber arrangierten Seite begrenzt der Kolbenboden 3 mit dem Kolbeninneren 5 einen hydraulischen Druckraum und die Feststellbremsaktuatorik wirkt ebenfalls auf den Kolbenboden 3 ein. Dazu ist im Kolbeninneren 5 ein dünnwandiger gesonderter Napf 6 mit einer Konusfläche vorgesehen, der zweistückig mit dem Bremskolben 1 ausgebildet ist. Der Napf 6 ist wie der Bremskolben 1 in Umformprozessen aus einem metallischen Werkstoff, wie insbesondere aus einem ebenen Blech, hergestellt. Die Kolbenwandung 2 verfügt über eine einheitliche Wandstärke s. Der Kolbenboden 3 ist im Vergleich zur Kolbenwandung 2 mit graduell verdickter Wandstärke sb ausgeführt.

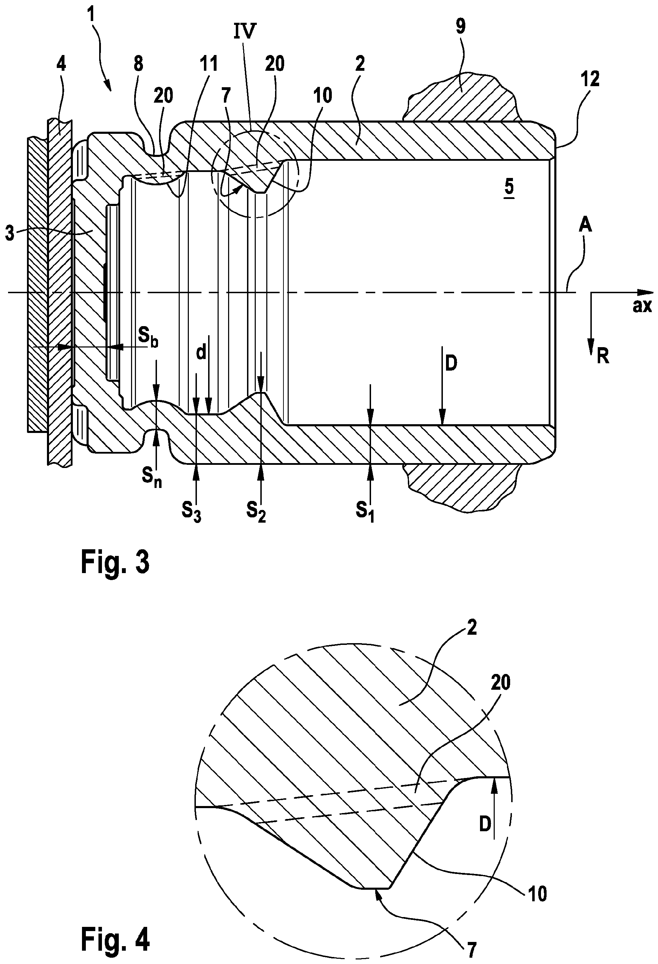

Die Figuren 2 -4 verdeutlichen nähere Einzelheiten von einem neuartigen sowie erfindungsgemäß ausgebildeten Bremskolben 1 wie folgt. Die Kolbenwandung 2 wird vorzugsweise durch Einspannung zwischen Kolbenboden 3 und freiem Rand in axialer Richtung unter Druck gesetzt. Im Metallwerkstoff wird folglich ein dreiachsiger Spannungszustand induziert, der dazu führt, dass sich Werkstoffteilchen vergleichbar einer Flüssigkeit verlagern können.

Dadurch ist die Kolbenwandung 2 im örtlich begrenzten, zylindrischen Kolbenwandabschnitt außen zylindrisch-glatt sowie nutfrei gezogen ausgebildet. Die Kolbenwandung 2 bildet örtlich in einem begrenzten Bezirk infolge Werkstoffteilchenverlagerung einen Wandabschnitt mit einstückig ausgeprägter Wandkonsole 7 aus, die radial in Richtung Kolbenlängsachse A sowie prinzipiell ringförmig umlaufend so vorfällt, dass die Wandstärke s2 in dem Kolbenwandabschnitt der Wandkonsole 7 örtlich begrenzt um ein Vielfaches erhöht ist. Diese Wandstärkendifferenzangabe gilt jeweils in Relation bezogen auf die geringste Kolbenwandstärke s1 im Kolbenwandabschnitt der lateral seitlich benachbart zu der aufgedickten Wandkonsole 7 vorliegt, also dazu seitlich versetzt arrangiert ist. Die seitlich versetzten Kolbenwandabschnitte können im direkten Vergleich untereinander über frei-unterschiedliche oder identisch übereinstimmend ausgeführte Wandstärke s1,s3 verfügen. In jedem Fall sind diese Wandabschnitte dünner gestaltet als die Aufdickung. Die Bemessung des aufgedickten Wandabschnitts mit der Wandstärke s2 liegt dabei beispielhaft vorzugsweise in einem Bereich vom, im Wesentlichen etwa, 0,1 - 10 fachen einer unverdicken "Regelwandstärke" s1. In Ergänzung wird jeweils für sich oder in Kombination für die gegenseitigen Relationen, Verhältnisse und Bemessung der Wandstärken folgende Richtlinie erteilt: 1) Sb entspricht ungefähr der Bandausgangsdicke So und ist kleiner als S2; b) S3 ist in etwa gleich oder größer als S1; c) S2 ist größer S3; d) Sn ist in etwa gleich oder kleiner S1.

Die aufgedickte Wandkonsole 7 ist bei einer bevorzugten Ausgestaltung dazu eingerichtet und bestimmt, um eine Schnittstelle für die Feststellbremsaktuatorik zu integrieren. Dabei verfügt die Wandkonsole 7 über wenigstens eine Flanke 10 mit einer Konizität oder Balligkeit. Lateral seitlich neben der aufgedickten Wandkonsole 7 , sowie in Richtung zum Kolbenboden 2 quer zur Kolbenlängsachse A versetzt, ist bei der bevorzugten Variante eine radial einwärts einrollierte Nut 8 mit Wandstärke sn in die Kolbenwandung 2 derart eingeprägt, dass die Kolbenwandung 2 einen Vorfall 11 in Richtung Kolbenlängsachse A ausprägt. Die Wandkonsole 7 und der benachbarte Vorfall 11 sind unterschiedlich hoch. Demzufolge ragen diese in Radialrichtung R gesehen jeweils unterschiedlich tief in das Kolbeninnere 5 (Richtung Kolbenlängsachse A) . Der Vorfall 11 kann gleich, "kleiner" oder größer als die Wandkonsole 7 ausgebildet sein.

Die Herstellung erfolgt in einer ersten Lösung durch Fließpressen wie in Fig. 2 rudimentär verdeutlicht, indem eine zylindrische Kolbenwandung 2 von einem napfförmig-kaltumgeformten Bremskolbenrohling, zur Ausprägung von einem örtlich begrenzt aufgedickten Bremskolbenwandabschnitt mit Wandkonsole 7 im Kolbeninneren 5, zwischen Kolbenboden 3 und freiem Rand 12, in Axialrichtung ax parallel zur Kolbenlängsachse A unter Zugspanung und/oder Druckspannung eingespannt wird (Fließpressen). Matritze, Patritze bzw. Schieber, Wider- bzw. Niederhalter, Druckkissen, Gesenke oder andere mögliche Anbauteile und Komponenten sind zur Vereinfachung weggelassen.

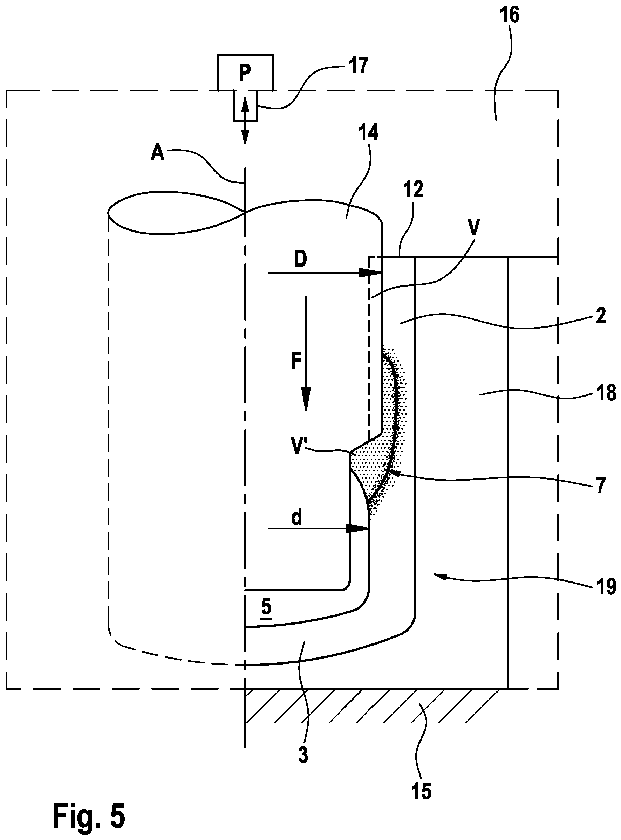

Nachstehend wird begleitend auf Fig. 5 Bezug genommen. Dies andere Herstellungsverfahren basiert ebenfalls auf der Weiterverarbeitung von einem napfförmig-kaltumgeformten Bremskolbenrohling. Dabei ist ein Außendurchmesser D einer Stufe 13 an einem translatorisch verschiebbar geführt gelagerten Dorn 14 in Bezug auf einen Innendurchmesser d im Kolbeninneren 5 eines fest gelagert angeordneten, napfförmigen Bremskolbenrohlings übermaßig ausgeführt. Der Dorn 14 wird mit seiner Stufe 13 (Formwerkzeug) translatorisch sowie koaxial zur Kolbenlängsachse A in das Kolbeninnere 5 vom Bremskolbenrohling eingeführt. Dadurch wirkt die Stufe 13 vergleichbar einem Formstempel /Werkstoffverdrängungswerkzeug und wirft bugwellenartig einen örtlich begrenzt aufgedickten Bremskolbenwandabschnitt incl. Die Wandkonsole 7 im Kolbeninneren 5 auf.

Die Fig. 5 verdeutlicht einen Tisch 15 vom Arbeitsraum 16 einer mikroprozessorgesteuerten hydraulischen Presse P mit im Arbeitsraum 16 translatorisch reversierbar geführtem Stößel 17 mit Kraft-Hub- oder Kraft-Geschwindigkeitsregelung. Auf dem Tisch 15 ist eine Matritze 18 fixiert. Die Matritze 18 dient zur Lagerung und Einspannung vom napfförmig-kaltumgeformten Bremskolbenrohling 19. Infolge Vorschub vom translatorisch, sowie axial relativverschiebbar über eine Stößelführung geführt gelagerten Dorn 14, wird eine lokale Aufdickung und/oder Wandkonsole 7 im Kolbeninneren 5 aufgeworfen. In diesem Prozess wird der Dorn 14 vorzugsweise unter variierter Kraft-Hub-Regelung, beziehungsweise Kraft-Geschwindigkeits-Steuerung, kontrolliert dosiert in das Kolbeninnere 5 vom Bremskolbenrohling 19 eingeführt.

Bei Bedarf ist die Kolbenwandung 2 mit mehreren aufgedickten Abschnitten bzw. Wandkonsolen 7 versehen, die nebeneinander also zueinander mit Abstand arrangiert sind. Es ist möglich, dass diese Abschnitte bzw. Konsolen im Durchmesser kaskadiert vorliegen. Um dies in einem Arbeitsgang mit einem Werkzeug auszubilden, kann der Dorn 14 mehrere entsprechend kaskadierte Stufen 13 aufweisen, die jeweils im Abstand axial hintereinander vorgesehen sind.

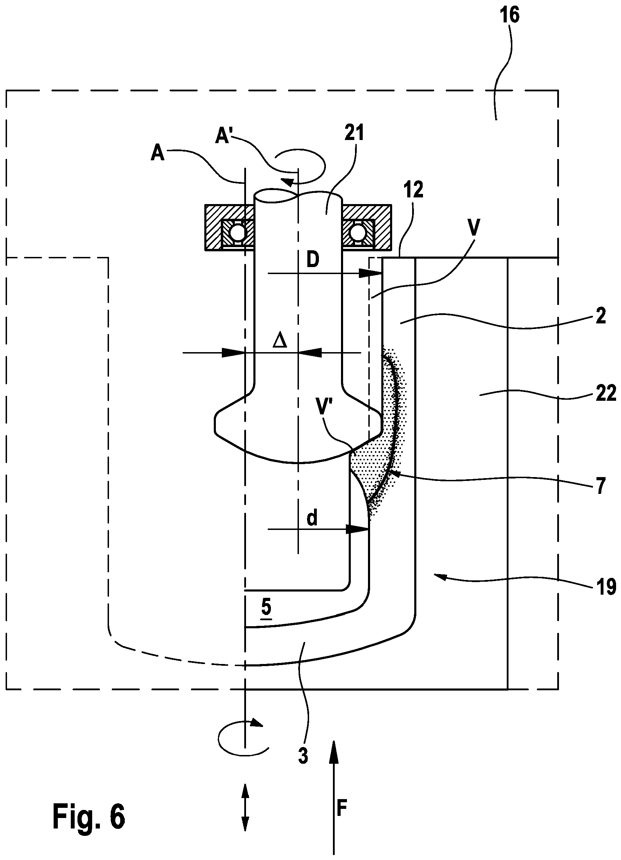

Alternativ zu der tiefziehartigen Innenbearbeitung mit Dorn 14 ist es möglich, eine profilierte, rotationssymmetrische Innenkontur durch Rollieren mit Hilfe von einem nach radial auswärts auf die Innenwandung einwirkenden, exzentrisch rotierend gelagertem (Achse A', Deaxierung Δ), Rollierwerkzeug 21 auszuführen. Dabei wird die Wandstärkenvariation also Werkstoffverdrängung im Wesentlichen durch eine koordiniert geregelte Vorschubbewegung sowie Zustellung zwischen dem deaxiert drehbar arrangierten Rollierwerkzeug 21 und dem Bremskolbenrohling 19 in Verbindung mit einer entsprechend passenden Andruckkraftmodulation erzeugt. In diesem Zusammenhang erhellt aus Fig. 6 beispielhaft ein entsprechendes Verfahren mit Rollierwerkzeug 21 zum Innenrollieren vom topfförmigen, metallischen Bremskolbenrohling 19. Demzufolge ist in einem Arbeitsraum 16 ein frei drehbar gelagertes Innenrollierwerkzeug 21 deaxiert arrangiert (Achsversatz Δ). Das Rollierwerkzeug kann als lose, frei drehbar gelagerte, Rolle vorliegen, die nach radial außen zustellbar ist. Der topfförmige - vorzugsweise tiefgezogene - Bremskolbenrohling 19 ist in einer Spannvorrichtung 22 unter Einhaltung der Kolbenlängsachse A fixiert, also von außen eingespannt. Die Spannvorrichtung 19 führt dabei eine rotatorische Antriebsdrehbewegung sowie eine Zustellbewegung und auch die Vorschubbewegung in Relation zu dem deaxiert arrangierten Rollierwerkzeug 21 aus. Ein Vorteil dieser Anordnung besteht darin, dass das Rollierwerkzeug fix ist, also keinerlei Verstellbewegung erfährt, wohingegen ausschließlich die Spannvorrichtung eine Antriebsdrehbewegung sowie Zustellund Vorschubbewegung ausführt. Wie oben erläutert, ist es auf Wunsch jedoch auch möglich dass eine Zustell- und/oder Vorschubbewegung von dem Rollierwerkzeug 21 ausgeführt wird, während der Bremskolbenrohling in seiner Spannvorrichtung 22 gedreht wird, ohne den Kerngedanken zu verlassen.

### Bezugszeichenliste

- 1: Bremskolben
- 2: Kolbenwandung
- 3: Kolbenboden
- 4: Rückenplatte
- 5: Kolbeninneres
- 6: Napf
- 7: Wandkonsole
- 8: Nut
- 9: Bremssattel
- 10: Flanke
- 11: Vorfall
- 12: Rand
- 13: Stufe
- 14: Dorn
- 15: Tisch
- 16: Arbeitsraum
- 17: Stößel
- 18: Matritze
- 19: Bremskolbenrohling
- 20: Entlüftungskanal
- 21: (Innen-)Rollierwerkzeug
- 22: Spannvorrichtung

- A: Kolbenlängsachse
- A': Achse (Rollierwerkzeug 21)
- ax: Axialrichtung
- R: Radialrichtung
- F: (Press-)Kraft
- S₀-sₓ: Wandstärke
- V,V': Werkstoffvolumen
- D,d: Durchmesser
- P: Presse
- Δ: Achsversatz (Deaxierung zwischen Bremskolbenrohling 19 und Rollierwerkzeug 21)

## Patentansprüche

1. Bremskolben (1) für einen Bremssattel (9) einer Scheibenbremse, welcher in Umformprozessen aus einem metallischen Werkstoff, insbesondere aus einem ebenen Blech, hergestellt ist, und als einseitig offener Topf mit einer Kolbenlängsachse A, mit einer Kolbenwandung (2) und mit einem Kolbenboden (3) einstückig ausgebildet ist, und im Bereich des Kolbenbodens (3) mit einer axialen Anlagefläche an einen Bremsbelag anlegbar ist, einschließlich umfassend wenigstens eine Schnittstelle für eine Feststellbremsaktuatorik, wobei wenigstens ein örtlich begrenzter, also partiell kaltgestauchter oder partiell abgestreckter, außenzylindrischer glatter Kolbenwandabschnitt eines Bremskolbenrohlings (19) radial innen mit partiell deformierter Kolbenwandung (2) vorliegt, welcher durch plastische Werkstoffdeformation mittels Werkstoffumverteilung (Fließen) einschließlich Kaltverfestigung seiner Kolbenwandstärke s2, s3, sn adaptiv verändert ausgebildet ist, **dadurch gekennzeichnet, dass** a) eine Kolbenaußenwandung in dem außenzylindrischen Kolbenwandabschnitt örtlich begrenzt glatt sowie nutfrei gezogen ausgebildet ist, dass b) eine Kolbeninnenwandung in diesem Kolbenwandabschnitt eine einstückig ausgeprägte Wandkonsole (7) ausbildet, die radial in Richtung Kolbenlängsachse A sowie ringförmig umlaufend derart vorfällt, dass c) die Kolbenwandstärke s2 in dem Kolbenwandabschnitt der Wandkonsole (7) örtlich begrenzt erhöht ist, d) in Relation bezogen auf eine Wandstärke s1 im Kolbenwandabschnitt der lateral zu der aufgedickten Wandkonsole (7) seitlich versetzt arrangiert ist.

2. Bremskolben (1) für einen Bremssattel (9) nach Anspruch 1, **dadurch gekennzeichnet, dass** die Kolbenwandstärke sl,s3 von den beiden Kolbenwandabschnitten, die zu der aufgedickten Wandkonsole (7) benachbart sind, im Wesentlichen übereinstimmt.

3. Bremskolben (1) für einen Bremssattel (9) nach Anspruch 1 oder 2, **dadurch gekennzeichnet, dass** die aufgedickte Wandkonsole (7) die Schnittstelle für die Feststellbremsaktuatorik integriert.

4. Bremskolben (1) für einen Bremssattel (9) nach einem oder mehreren der Ansprüche 1-3, **dadurch gekennzeichnet, dass** die Wandkonsole (7) über wenigstens eine Flanke (10) mit einer Konizität verfügt.

5. Bremskolben (1) für einen Bremssattel (9) nach einem oder mehreren der Ansprüche 1-4, **dadurch gekennzeichnet, dass** die Wandkonsole (7) über wenigstens eine Flanke (10) mit einer Balligkeit verfügt.

6. Bremskolben (1) für einen Bremssattel (9) nach einem oder mehreren der Ansprüche 1-5, **dadurch gekennzeichnet, dass** mehrere Wandkonsolen (7) im Abstand nebeneinander kaskadiert vorgesehen sind.

7. Bremskolben (1) für einen Bremssattel (9) nach Anspruch 6, **dadurch gekennzeichnet, dass** der Abstand zwischen den Wandkonsolen (7) identisch ausgebildet ist.

8. Bremskolben (1) für einen Bremssattel (9) nach Anspruch 6, **dadurch gekennzeichnet, dass** der Abstand zwischen den Wandkonsolen (7) unterschiedlich ausgebildet ist.

9. Bremskolben (1) für einen Bremssattel (9) nach einem oder mehreren der Ansprüche 6-8, **dadurch gekennzeichnet, dass** die verschiedenen Wandkonsolen (7) in Relation zueinander über unterschiedliche Durchmesser verfügen, und wobei deren unterschiedliche Durchmesser mit zunehmend bodennaher Platzierung über verringerten Durchmesser verfügen (Kaskadierung).

10. Bremskolben (1) für einen Bremssattel (9) nach einem oder mehreren der vorhergehenden Ansprüche 1-9, **dadurch gekennzeichnet, dass** jede Wandkonsole (7), und/oder Vorfall (11) wenigstens einen, axial gerichteten, Entlüftungskanal (20) ausbildet.

11. Bremskolben (1) für einen Bremssattel (9) nach einem oder mehreren der vorhergehenden Ansprüche 1-10, **dadurch gekennzeichnet, dass** jede Wandkonsole (7), und/oder Vorfall (11) über mehrere, am Umfang zueinander versetzt arrangierte, Entlüftungskanäle (20) verfügt.

12. Bremskolben (1) für einen Bremssattel (9) nach einem oder mehreren der vorhergehenden Ansprüche 1-11, **dadurch gekennzeichnet, dass** die Entlüftungskanäle (20) bei identischem Versatz zueinander regelmäßig über jede ringförmige Wandkonsole (7) und/oder Vorfall (11) verteilt vorgesehen sind.

13. Bremskolben (1) für einen Bremssattel (9) nach einem oder mehreren der vorhergehenden Ansprüche 1-12, **dadurch gekennzeichnet, dass** lateral seitlich neben der aufgedickten Wandkonsole (7), sowie in Richtung zum Kolbenboden (3) quer zur Kolbenlängsachse A versetzt, eine radial einwärts einrollierte Nut (8) mit unverdickter Kolbenwandstärke sn in die Kolbenwandung (2) derart eingeprägt ist, dass die Kolbenwandung (2) einen Vorfall (11) in Richtung Kolbenlängsachse A ausprägt.

14. Bremskolben (1) für einen Bremssattel (9) nach Anspruch 13, **dadurch gekennzeichnet, dass** die Wandkonsole (7) und der Vorfall (11) in Radialrichtung R jeweils unterschiedlich tief ins Kolbeninnere 5 vorstehen.

15. Bremskolben (1) für einen Bremssattel (9) nach Anspruch 13 oder 14, **dadurch gekennzeichnet, dass** der Vorfall (11) kleiner als die benachbarte Wandkonsole (7) ausgebildet ist.

16. Bremskolben (1) für einen Bremssattel (9) nach einem oder mehreren der vorhergehenden Ansprüche, **gekennzeichnet durch** folgende Merkmale, jeweils für sich oder in beliebiger Kombination miteinander, a) eine graduell verdickte Wandstärke Sb stimmt inetwa mit einer Wandausgangsdicke So überein und ist kleiner als S2; b) S3 ist in etwa gleich oder größer als S1; c) S2 ist größer als S3; d) Sn ist inetwa gleich oder kleiner als S1.

17. Verfahren zur Umformung von einem metallischen Werkstoff zur spanlosen Erzeugung von einem einstückigen Bremskolben (1), umfassend eine Schnittstelle für eine Feststellbremsaktuatorik, für einen Bremssattel (9), mit den Merkmalen nach einem oder mehreren der vorhergehenden Ansprüche 1-16, **dadurch gekennzeichnet, dass** eine zylindrische Kolbenwandung (2) von einem Bremskolbenrohling (19), zur Ausprägung von einem örtlich begrenzt aufgedickten Bremskolbenwandabschnitt mit Wandkonsole (7) im Kolbeninneren (5), zwischen Kolbenboden (3) und freiem Rand (12), in Axialrichtung ax parallel zur Bremskolbenlängsachse A unter Zugspannung und/oder Druckspannung eingespannt wird .

18. Verfahren nach Anspruch 17, **dadurch gekennzeichnet, dass** ein Außendurchmesser D einer Stufe (13) von einem verschieblich geführt gelagerten Dorn (14) in Bezug auf einen rohen Innendurchmesser d von einem fest gelagert angeordneten, napfförmigen Bremskolbenrohling (19) übermaßig ausgeführt ist, und dass der Dorn (14) mit seiner Stufe (13) translatorisch sowie koaxial zur Kolbenlängsachse A in das Kolbeninnere (5) vom Bremskolbenrohling (19) derart eingeführt wird, dass die Stufe (13) einen örtlich begrenzt aufgedickten Bremskolbenwandabschnitt mit Wandkonsole (7) im Kolbeninneren aufwirft.

19. Verfahren nach Anspruch 17 und/oder 18, **gekennzeichnet durch** eine fest im Arbeitsraum einer Presse P arrangierte Matritze (18) zwecks Lagerung und Einspannung vom napfförmigen Bremskolbenrohling (19), und durch den zeitlich nachgelagerten Einsatz von einem translatorisch, sowie axial relativverschiebbar, mit der Presse P geführt gekoppelt gelagerten Dorn (14), zwecks Ausprägung von Aufdickung und/oder Wandkonsole (7) in der Kolbenwandung (2), und wobei der Dorn (14) unter Kraft-Hub-Regelung, beziehungsweise Kraft-Zeit-Steuerung, dosiert in das Kolbeninnere (5) vom Bremskolbenrohling (19) eingeführt wird.

20. Verfahren nach einem oder mehreren der Ansprüche 17 bis 19, **gekennzeichnet durch** einen Dorn (14) mit mehreren kaskadierten Stufen (13), welche axial nebeneinander, sowie mit Abstand zueinander, vorgesehen sind.

21. Verfahren nach Anspruch 17, **dadurch gekennzeichnet, dass** in einem Arbeitsraum (16) ein drehbar gelagertes Innenrollierwerkzeug (21) und ein Bremskolbenrohling (19) vorgesehen sind, wobei der Bremskolbenrohling (19) in einer Spannvorrichtung (22) fixiert ist, und die Spannvorrichtung (19) eine rotatorische Antriebsdrehbewegung, eine Zustellbewegung und/oder eine Vorschubbewegung ausführt, beziehungsweise umgekehrt.

## Claims

1. A brake piston (1) for a brake caliper (9) of a disc brake, which is manufactured in transforming processes from a metallic material, in particular from a flat sheet metal, and which is integrally formed as a pot open on one side and has a longitudinal piston length A, a piston wall (2) and a piston bottom (3), and which can be applied against a brake lining in the area of the piston bottom (3) with an axial contact surface, including comprising at least one interface for a parking brake actuator system, wherein at least one locally delimited, namely partially cold-upset or partially elongated outer cylindrical smooth piston wall portion of a brake piston blank (19) having radially inside a partially deformed piston wall (2) is prepared, which is formed to be adaptively changed by plastic material deformation by means of material redistribution (flow) including strain hardening of its piston wall thickness s2, s3, sn, **characterized in that** a) a piston outer wall in the outer cylindrical portion is formed locally delimited to be smooth and is drawn free from grooves, b) a piston inner wall in this piston wall portion forms an integrally pronounced wall shoulder (7), which prolapses radially toward the longitudinal piston axis A as well as circularly extending in such a manner that c) the piston wall thickness s2 in the piston wall portion of the wall shoulder (7) is increased locally delimited, d) in relation with respect to a wall thickness s1 in the piston wall portion which is arranged to be laterally offset laterally to the thickened wall shoulder (7).

2. The brake piston (1) for a brake caliper (9) according to claim 1, **characterized in that** the piston wall thicknesses s1, s3 of both piston wall portions, which are adjacent to the thickened wall shoulder (7), substantially correspond to one another.

3. The brake piston (1) for a brake caliper (9) according to claim 1 or 2, **characterized in that** the thickened wall shoulder (7) integrates the interface for the parking brake actuator system.

4. The brake piston (1) for a brake caliper (9) according to one or more of claims 1 to 3, **characterized in that** the wall shoulder (7) has at least one flank (10) having conicity.

5. The brake piston (1) for a brake caliper (9) according to one or more of claims 1 to 4, **characterized in that** the wall shoulder (7) has at least one flank (10) having convexity.

6. The brake piston (1) for a brake caliper (9) according to one or more of claims 1 to 5, **characterized in that** a plurality of wall shoulders (7) are provided to be spaced from one another in a cascaded manner.

7. The brake piston (1) for a brake caliper (9) according to claim 6, **characterized in that** the distance between the wall shoulders (7) is formed to be identical.

8. The brake piston (1) for a brake caliper (9) according to claim 6, **characterized in that** the distance between the wall shoulders (7) is formed to be different.

9. The brake piston (1) for a brake caliper (9) according to one or more of claims 6 to 8, **characterized in that** the different wall shoulders (7) have different diameters in relation to one another, and wherein their different diameters with a placement increasingly near the bottom have a reduced diameter (cascading).

10. The brake piston (1) for a brake caliper (9) according to one or more of claims 1 to 9, **characterized in that** each wall shoulder (7) and/or protrusion (11) has at least one axially directed vent duct (20).

11. The brake piston (1) for a brake caliper (9) according to one or more of claims 1 to 10, **characterized in that** each wall shoulder (7) and/or protrusion (11) has a plurality of vent ducts (20) arranged to be offset from one another at the circumference.

12. The brake piston (1) for a brake caliper (9) according to one or more of claims 1 to 11, **characterized in that** the vent ducts (20), at an identical offset relative to one another, are provided to be regularly distributed over each circular wall shoulder (7) and/or protrusion (11).

13. The brake piston (1) for a brake caliper (9) according to one or more of claims 1 to 12, **characterized in that,** laterally on the side next to the thickened wall shoulder (7), as well as transversely offset to the piston longitudinal axis A in the direction towards the piston bottom (3), a radially inwardly rolled groove (8) having a non-thickened piston wall thickness sn is impressed into the piston wall (2) in such a manner that the piston wall (2) forms a protrusion (11) toward the piston longitudinal axis A.

14. The brake piston (1) for a brake caliper (9) according to claim 13, **characterized in that** the wall shoulder (7) and the protrusion (11) in each case protrude differently deep into the piston interior (5) in the radial direction R.

15. The brake piston (1) for a brake caliper (9) according to claim 13 or 14, **characterized in that** the protrusion (11) is formed to be smaller than the adjacent wall shoulder (7).

16. The brake piston (1) for a brake caliper (9) according to one or more of the preceding claims, **characterized by** the following features taken alone or in any combination with one another, a) a gradually thickened wall thickness Sb complies approximately with an initial wall thickness So and is smaller than S2; b) S3 is approximately identical to or larger than S1; c) S2 is larger than S3; d) Sn is approximately identical to or smaller than S1.

17. A method for transforming a metallic material for producing a monobloc brake piston (1) in a non-cutting manner, comprising an interface for a parking brake actuator system, for a brake caliper (9), having the features according to one or more of the preceding claims 1 to 16, **characterized in that** a cylindrical piston wall (2) of a brake piston blank (19) is clamped under tensile stress and/or compressive stress for forming a locally delimited thickened brake piston wall portion having a wall shoulder (7) in the piston interior (5) between the piston bottom (3) and the free edge (12) in the axial direction ax in parallel to the piston brake longitudinal axis A.

18. The method according to claim 17, **characterized in that** an outer diameter D of a step (13) of aa mandrel (14) which is mounted to be slidably guided is designed to be oversized with respect to a raw inner diameter d of a bowl-shaped brake piston blank (19), which is arranged to be fixedly mounted, and that the mandrel (14), together with its step (13) is introduced translationally into the piston interior (5) of the brake piston blank (19) and coaxially to the piston longitudinal axis A in such a manner that the step (13) raises a locally delimited thickened brake piston wall portion having a wall shoulder (7) within the piston interior.

19. The method according to claim 17 and/or 18, **characterized by** a die (18), which is fixedly arranged in the working space of a press P for the purpose of mounting an clamping the bowl-shaped brake piston blank (19), and by the temporal downstream use of a translational and axially relative slidable mandrel (14), which is mounted to be coupled to the press P in a guided manner, for the purpose of pronouncing the thickening and/or wall shoulder (7) in the piston wall (2), and wherein the mandrel (14) is introduced in a dosed manner into the piston interior (5) of the brake piston blank (19) under force-stroke control or force-time control.

20. The method according to one or more of the claims 17 to 19, **characterized by** a mandrel (14) having a plurality of cascaded steps (13), which are provided axially next to one another and at a spacing to one another.

21. The method according to claim 17, **characterized in that** a rotationally mounted inner rolling tool (21) and a brake piston blank (19) are provided in a working space (16), wherein the brake piston blank (19) is fixed in a clamping device (22), and the clamping device (19) executes a rotational drive rotation movement, a delivery movement and/or a feed movement, or rather vice versa.

## Revendications

1. Piston de frein (1) pour un étrier de frein (9) d'un frein à disque, lequel est fabriqué dans des opérations de déformation à partir d'un matériau métallique, en particulier à partir d'une tôle plane, et est constitué d'une seule pièce comme pot ouvert d'un côté, présentant un axe longitudinal de piston A, une paroi de piston (2) et un fond de piston (3), et peut être posé sur une garniture de frein dans la zone du fond de piston (3) avec une face de pose axiale, y compris comprenant au moins une interface pour un dispositif d'actionnement de frein de stationnement, sachant qu'au moins un tronçon de paroi de piston lisse extérieurement cylindrique, localement délimité, donc partiellement refoulé à froid ou partiellement étiré, d'une ébauche de piston de frein (19) est pourvu, radialement à l'intérieur, d'une paroi de piston (2) partiellement déformée, laquelle est constituée de manière adaptativement modifiée par déformation plastique de matériau moyennant une distribution de matériau (écoulement) y compris un écrouissage de son épaisseur de paroi de piston s2, s3, sn, **caractérisé en ce que** a) une paroi extérieure de piston est constituée de manière lisse ainsi qu'étirée sans rainure de manière localement délimitée dans le tronçon de paroi de piston extérieurement cylindrique, **en ce que** b) une paroi intérieure de piston constitue dans ce tronçon de paroi de piston une console de paroi (7) estampée d'une seule pièce qui fait saillie radialement vers l'axe longitudinal de piston A ainsi que périphériquement en forme annulaire de telle de manière que c) l'épaisseur de paroi de piston s2 soit augmentée de manière localement délimitée dans le tronçon de paroi de piston de la console de paroi (7), d) soit agencée de manière latéralement décalée par rapport à une épaisseur de paroi s1 dans le tronçon de paroi de piston latéralement par rapport à la console de paroi (7) épaissie.

2. Piston de frein (1) pour un étrier de frein (9) selon la revendication 1, **caractérisé en ce que** l'épaisseur de paroi de piston s1, s3 des deux tronçons de paroi de piston qui sont adjacents à la console de paroi (7) épaissie concorde sensiblement.

3. Piston de frein (1) pour un étrier de frein (9) selon la revendication 1 ou 2, **caractérisé en ce que** la console de paroi (7) épaissie intègre l'interface pour le dispositif d'actionnement de frein de stationnement.

4. Piston de frein (1) pour un étrier de frein (9) selon l'une ou plusieurs des revendications 1 à 3, **caractérisé en ce que** la console de paroi (7) dispose d'au moins un flanc (10) présentant une conicité.

5. Piston de frein (1) pour un étrier de frein (9) selon l'une ou plusieurs des revendications 1 à 4, **caractérisé en ce que** la console de paroi (7) dispose d'au moins un flanc (10) présentant un bombement.

6. Piston de frein (1) pour un étrier de frein (9) selon l'une ou plusieurs des revendications 1 à 5, **caractérisé en ce que** plusieurs consoles de paroi (7) sont prévues en cascade à distance les unes à côté des autres.

7. Piston de frein (1) pour un étrier de frein (9) selon la revendication 6, **caractérisé en ce que** la distance entre les consoles de paroi (7) est constituée de manière identique.

8. Piston de frein (1) pour un étrier de frein (9) selon la revendication 6, **caractérisé en ce que** la distance entre les consoles de paroi (7) est constituée de manière différente.

9. Piston de frein (1) pour un étrier de frein (9) selon l'une ou plusieurs des revendications 6 à 8, **caractérisé en ce que** les diverses consoles de paroi (7) disposent de diamètres différents les unes par rapport aux autres, et sachant que leurs diamètres différents disposent d'un diamètre réduit au fur et à mesure qu'elles sont placées près du fond (disposition en cascade).

10. Piston de frein (1) pour un étrier de frein (9) selon l'une ou plusieurs des revendications précédentes 1 à 9, **caractérisé en ce que** chaque console de paroi (7), et/ou saillie (11), constitue au moins un canal d'évent (20) orienté axialement.

11. Piston de frein (1) pour un étrier de frein (9) selon l'une ou plusieurs des revendications précédentes 1 à 10, **caractérisé en ce que** chaque console de paroi (7), et/ou saillie (11), dispose de plusieurs canaux d'évent (20) agencés de manière décalée les uns par rapport aux autres sur la périphérie.

12. Piston de frein (1) pour un étrier de frein (9) selon l'une ou plusieurs des revendications précédentes 1 à 11, **caractérisé en ce que** les canaux d'évent (20), à décalage identique, sont prévus de manière répartie régulièrement les uns par rapport aux autres sur chaque console de paroi (7) en forme annulaire et/ou saillie (11).

13. Piston de frein (1) pour un étrier de frein (9) selon l'une ou plusieurs des revendications précédentes 1 à 12, **caractérisé en ce que** latéralement à côté de la console de paroi (7) épaissie, ainsi que de manière décalée en direction du fond de piston (3) transversalement à l'axe longitudinal de piston A, une rainure (8) enroulée radialement vers l'intérieur présentant une épaisseur de paroi de piston sn non épaissie est ménagée dans la paroi de piston (2) de telle manière que la paroi de piston (2) forme une saillie (11) vers l'axe longitudinal de piston A.

14. Piston de frein (1) pour un étrier de frein (9) selon la revendication 13, **caractérisé en ce que** la console de paroi (7) et la saillie (11) dépassent dans l'intérieur de piston (5) en direction radiale R à raison d'une profondeur respectivement différente.

15. Piston de frein (1) pour un étrier de frein (9) selon la revendication 13 ou 14, **caractérisé en ce que** la saillie (11) est constituée de manière plus petite que la console de paroi (7) adjacente.

16. Piston de frein (1) pour un étrier de frein (9) selon l'une ou plusieurs des revendications précédentes, **caractérisé par** les caractéristiques suivantes, respectivement isolément ou en combinaison quelconque les unes avec les autres, a) une épaisseur de paroi Sb épaissie graduellement concorde approximativement avec une épaisseur de sortie de paroi So et est inférieure à S2 ; b) S3 est approximativement égale ou supérieure à S1 ; c) S2 est supérieure à S3 ; d) Sn est approximativement égale ou inférieure à S1.

17. Procédé de déformation d'un matériau métallique pour la réalisation sans copeaux d'un piston de frein (1) d'une seule pièce, comprenant une interface pour un dispositif d'actionnement de frein de stationnement, pour un étrier de frein (9), avec les caractéristiques selon l'une ou plusieurs des revendications précédentes 1 à 16, **caractérisé en ce qu'**une paroi de piston (2) cylindrique d'une ébauche de piston de frein (19) est serrée en effort de traction et/ou en effort de compression pour estamper un tronçon de paroi de piston de frein épaissi de manière localement délimitée, présentant une console de paroi (7) dans l'intérieur de piston (5), entre le fond de piston (3) et un bord libre (12) en direction axiale Ax parallèlement à l'axe longitudinal de piston de frein A.

18. Procédé selon la revendication 17, **caractérisé en ce qu'**un diamètre extérieur D d'un étage (13) d'un mandrin (14) monté en guidage coulissant est exécuté pour être surdimensionné par rapport à un diamètre intérieur brut d d'une ébauche de piston de frein (19) en forme de coupelle disposé en montage fixe, et **en ce que** le mandrin (14) est introduit avec son étage (13) en translation ainsi que coaxialement à l'axe longitudinal de piston A dans l'intérieur de piston (5) de l'ébauche de piston de frein (19) de telle manière que l'étage (13) projette un tronçon de paroi de piston de frein épaissi de manière localement délimitée présentant une console de paroi (7) dans l'intérieur de piston.

19. Procédé selon la revendication 17 et/ou 18, **caractérisé par** une matrice (18) agencée fixement dans le compartiment de travail d'une presse P pour le support et le serrage de l'ébauche de piston de frein (19) en forme de coupelle, et par la mise en œuvre temporellement consécutive d'un mandrin (14) monté de manière couplée à la presse P en guidage par translation ainsi que de manière relativement coulissante axialement, pour l'estampage d'un épaississement et/ou d'une console de paroi (7) dans la paroi de piston (2), et sachant que le mandrin (14) est introduit de manière dosée dans l'intérieur de piston (5) de l'ébauche de piston de frein (19) en régulation de force-course de déplacement, ou respectivement en régulation force-temps.

20. Procédé selon l'une ou plusieurs des revendications 17 à 19, **caractérisé par** un mandrin (14) présentant plusieurs étages (13) disposés en cascade, lesquels sont prévus axialement les uns à côté des autres, ainsi qu'à distance les uns des autres.

21. Procédé selon la revendication 17, **caractérisé en ce que,** dans un compartiment de travail (16), un outil d'enroulement intérieur (21) monté de manière rotative et une ébauche de piston de frein (19) sont prévus, sachant que l'ébauche de piston de frein (19) est fixée dans un dispositif de serrage (22), et le dispositif de serrage (19) exécute un mouvement pivotant d'entraînement rotatif, un mouvement d'approche et/ou un mouvement d'avance, ou respectivement inversement.
